# EUROPEAN PATENT APPLICATION

(11) **EP 2 421 278 A2**
(43) Date of publication of application: **22.02.2012**
(21) Application number: 11171548.8
(22) Date of filing: 27.06.2011
(51) Int. Cl.: H04N 21/4788, H04N 21/462, H04N 21/454

(54) **Display apparatus and display method**

(30) Priority: 16.08.2010 KR 20100078814
(71) Applicant: SAMSUNG ELECTRONICS CO., LTD., Suwon-si Gyeonggi-do 442-742 (KR)
(72) Inventor: Choi, Seung-hyuk, Gyeonggi-do (KR); Song, In-hyuk, Gyeonggi-do (KR)
(74) Representative: Clark, David James

(57) **Abstract**

A display method and apparatus are disclosed. The display method includes selecting a broadcasting channel to display a broadcast program, accessing an outside server to receive a SNS (Social Network Service) message corresponding to at least one of the broadcasting channel and the broadcast program among SNS messages registered with the outside server, and displaying the received SNS message on a picture displaying the broadcast program. The display apparatus includes a receiving unit for selecting a broadcasting channel to receive a broadcast program; a signal processing unit for processing the received broadcast program for display, a communication unit for accessing an outside server for receiving a SNS (Social Network Service) message registered with the outside server; said SNS message corresponding to at least one of the broadcasting channel and the broadcast program among SNS messages registered with the outside server; and a control unit to control the signal processing unit to display the received SNS message on the picture displaying the broadcast program.

## Description

### BACKGROUND

### 1. Field

Apparatuses and methods consistent with the present invention relate to a display apparatus and a display method thereof. More specifically, the present invention relates to a display apparatus and a display method thereof, which can provide a Social Network Service (SNS) message.

### 2. Description of the Related Art

In recent times, there has been a rapid spread of individual media to store and collect personal postings or other required information through the internet. The introduction of all sorts of communities that value personal connections, a network activity in which 'relationships' are emphasized, has come into prominence.

A SNS, which is symbolized by the Memedia (personal media) field (a blog, a mini homepage, etc.) and the communities in which the 'relationships' are emphasized, is becoming an effective model for a world capable of building relationships with desired people according to personal needs, while transcending the limits of time and space.

The personal media, which is represented by the blog, the mini home page, a Twitter, a Myspace, a Facebook, etc, as a basic SNS, is characterized by contents which are simple in composition and free in format, thereby easily and quickly creating various content to produce a massive amount of information.

Further, newspaper companies, broadcasters, and general companies are growing more and more interested in making new business models by grafting the SNS, such as 'Twitter,' 'Facebook,' etc., which are real-time communication services that are growing explosively with a spread of the mobile market, onto their existing businesses.

However, since the SNSs provide only an ordinary SNS, there is no method, at present, in which a viewer can bring and use SNS information on a channel-by-channel basis with respect to broadcast programs which are broadcast on TV.

### SUMMARY

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a display apparatus and a display method thereof, which can provide a SNS (Social Network Service) message corresponding to at least one of a broadcasting channel and a broadcast program.

According to one aspect of the exemplary embodiments, a display method may include selecting a broadcast channel to display a broadcast program; accessing an outside server to receive a SNS message corresponding to at least one of the broadcasting channel and the broadcast program, among SNS messages registered with the outside server, and displaying the received SNS message on a picture displaying the broadcast program.

The accessing the outside server to receive the SNS message may include inputting or receiving a user command for SNS message confirmation in the course of displaying the broadcast program; accessing the outside server through a network by using an outside server address stored in advance; providing information for at least one of the broadcasting channel and the broadcast program to the outside server, and receiving a SNS message corresponding to the information provided.

The accessing of the outside server to receive the SNS message may further include selecting a filtering option for filtering the SNS messages.

The filtering option may include at least one of an option for selecting a SNS message provider, and an option based on information of a broadcaster, a broadcasting channel and a broadcast program.

The outside server may include a SNS server for providing the social network service, or at least one data server to down load and store the SNS messages from the SNS server in advance.

The method may further include storing information of at least one of the broadcasting channel and a service provider to provide the broadcasting channel. Accessing the outside server to receive the SNS message may include accessing the outside server by using the stored information.

The SNS message may include a form conforming to at least one of a hash rule and an account rule corresponding to at least one of the broadcasting channel and the broadcast program.

Here, the SNS message may include at least one of an information message, an advertizing message, and an event message and a subtitle message corresponding to at least one of the broadcasting channel and the broadcast program.

According to another aspect of the exemplary embodiments, a display apparatus may include a receiving unit to select a broadcasting channel to receive a broadcast program, a signal processing unit to process the received broadcast program thus to display on a picture, a communication unit to access an outside server to receive a SNS (Social Network Service) message corresponding to at least one of the broadcasting channel and the broadcast program among SNS messages registered with the outside server, and a control unit to control the signal processing unit to display the received SNS message on the picture displaying the broadcast program.

The apparatus may further include a user interface unit to input or receive a user command for SNS message confirmation in the course of displaying the broadcast program.

The communication unit may access the outside server through a network by using an outside server address stored in advance when the user command is inputted, and provide information for at least one of the broadcasting channel and the broadcast program to the outside server to receive a SNS message corresponding to the provided information.

The user interface unit may provide a menu selecting a filtering option for filtering the SNS message.

Here, the filtering option may include at least one of an option for selecting a SNS message provider, and an option based on information of a broadcaster, a broadcasting channel and a broadcast program.

The outside server may include a SNS server for providing the social network service, or at least one data server to download and store SNS messages from the SNS server in advance.

The apparatus may further include a storing unit to store information of at least one of the broadcasting channel and a service provider to provide the broadcasting channel, and the communication unit may access the outside server by using the stored information.

The SNS message may include a form conforming to at least one of a predetermined hash rule and a predetermined account rule.

The SNS message may include at least one of an information message, an advertizing message; an event message, and a subtitle message corresponding to at least one of the broadcasting channel and the broadcast program.

According to the apparatus and method, a convenience of the user can be promoted and B2B (business to business) advertizing models between broadcasters and home electronics companies can be provided.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects of the present invention will become more apparent by describing certain exemplary embodiments with reference to the accompanying drawings, in which:
FIGS. 1A and 1B are views for explaining constructions of SNS providing systems according to various exemplary embodiments;
FIG. 2 is a block diagram illustrating a construction of a display apparatus according to an exemplary embodiment;
FIGS. 3A and 3B are views for explaining a SNS message providing method according to an exemplary embodiment;
FIG. 4 is a view illustrating a SNS message providing picture according to an exemplary embodiment;
FIGS. 5A to 5D are views illustrating SNS message providing pictures according to various exemplary embodiments;
FIGS. 6A to 6C are views for explaining SNS message providing methods according to various exemplary embodiments; and
FIG. 7 is a flow chart for explaining a display method according to an exemplary embodiment.

### DETAILED DESCRIPTION OF EXEMPLARY EMBODIMENTS

Exemplary embodimentsare described in greater detail below with reference to the accompanying drawings.

In the following description, like drawing reference numerals are used for the like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

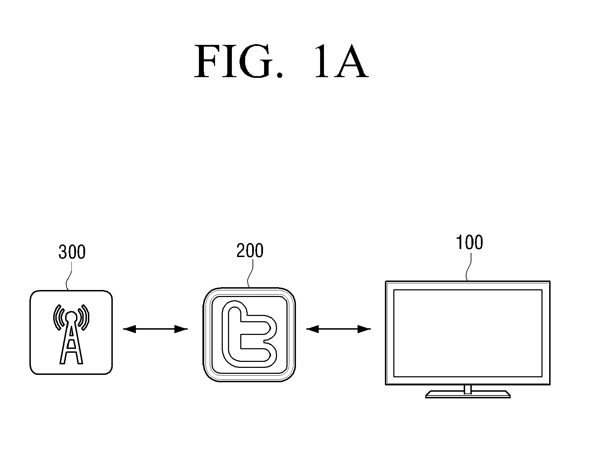

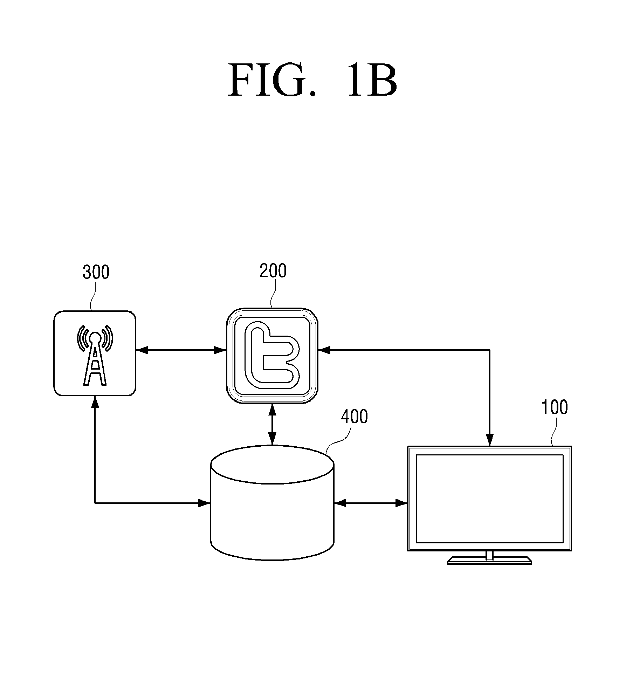

FIGS. 1A and 1B are views for explaining constructions of SNS providing systems according to various exemplary embodiments of the present invention.

Referring to FIG. 1A, the SNS providing system may be embodied in the form of including a display apparatus 100, a SNS server 200 and a source provider 300.

The display apparatus 100 may be embodied as a TV connected to an outside server to be able to receive and provide SNS messages, for instance, an apparatus accessible to an internet, such as an IPTV (Internet Protocol Television), a mobile phone, etc.

Here, the IPTV is a TV which can provide an information service, a video content, a broadcasting, etc. by using a high-speed internet.

The SNS server 200 means a server which can provide a SNS (Social Network Service).

To better understand the present invention, a concept of the SNS is briefly explained as follows.

The SNS is a service which allows personal connections with acquaintances, such as friends, seniors and juniors, colleagues and so on to be reinforced and allows wide human networks (relationships) to form while building new personal connections, on the Web.

As individual's needs of expression grow strong, the SNS, which allows social relations between people to be built and allows friendships with other people to be maintained, is also gradually developing. The difference between a community service, such as a café, a society and the like on the Web, and the SNS is that in the community service, people who are interested in certain subjects are grouped to share exclusive services, whereas in the SNS, the core is myself, that is, individuals to share their own concerns and personalities.

As typical SNSes, there are a Twitter, a Myspace, a Linkedin, a Vivo, a H15, a Xing, a Facebook, a Cyworld, etc.

The source provider 300 may be a broadcaster to provide a broadcasting channel source, a newspaper company, a broadcast program manufacturer, an advertizing manufacturer, etc.

According to the SNS providing system shown in FIG. 1A, the source provider 300 may transmit SNS messages to the SNS server 200 in a predetermined form promised with the display apparatus 100 in advance.

According to this, the display apparatus 100 may connect to the SNS server 200 to receive the SNS messages in the predetermined form promised with the source provider 300 in advance.

To be more specific, the SNS messages in the predetermined form may be a form conforming to at least one of a predetermined account rule and a hash rule.

Here, the account may mean an ID joined to a site providing the SNSes. In other words, the source provider 300, for instance, the broadcaster may create her or his own account in the SNS site, such as the Twitter, the Facebook, or the like, to use it in providing the SNS message.

Also, the broadcaster or the broadcast program manufacturer may create her or his account on a broadcast program-by-broadcast program basis in the SNS to use it in providing the SNS messages.

Hash tags # are included in the SNS messages, so that to immediately move to a search page and display a searched result when being clicked, a link is created to a word with the hash tag. In other words, the hash tags attach labels to the SNS messages and thus the SNS messages can be grouped through the hash tags. This enables the SNS messages to be easily searched, and enables the SNS messages on certain contents to be grouped and displayed.

For better understanding, an example of the account rule and the hash rule in case that the SNS server is "the Twitter" is described below

Example of account rule
@[ChannelName][end_account_prefix][tweet message]
@mbccast[VJ special forces unit] crying and laughing people for a jackpot after lottery winning Seoul spar convenience store 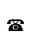 02-951-6455 URL:http://mdccast.co.kr/1234

Here, ChannelName can get directly from a PSIP or PSI/SI, or get from an EPG. Also, 'cast' can be changed from a default prefix name through a menu.

Example of hash rule
@[ChannelName][end_account_prefix]#[ChannelName][end_hash_prefix][tweet message]
@mbccast[VJ special forces unit] crying and laughing people for a jackpot after lottery winning Seoul spar convenience store 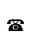 02-951-6455 URL:http://mdccast.co.kr/1234 #mbcVJ

Here, the hash rule can be divided into a situation where it is transcribed with an account of a designated channel and a situation where it is not transcribed with the account of the designated channel. For instance, in the case of transcribing the designated channel with the hash tag #mbcVJ, the TV can receive only SNS messages transmitted from the corresponding broadcaster.

In the case of otherwise transcribing an event name or the like with the hash tag, the TV can receive only SNS message providing information on the corresponding event among SNS messages corresponding to the certain account.

According to FIG. 1B, the SNS providing system may be embodied in the form of including a display apparatus 100, a SNS server 200, a source provider 300 and a data server 400.

For the sake of providing a convenient explanation, functions of components shown in FIG. 1B overlapped with those of components shown in FIG. 1A are not described in detail.

According to the SNS providing system shown in FIG. 1B, source provider 300 can transmit SNS messages to SNS server 200 through her or his own account by herself or himself without any need to conform the hash tag, the channel name or the like with the predetermined rules, as shown in FIG. 1A.

If source provider 300 wants to provide the SNS messages through display apparatus 100, she or he may make a promise with a manufacturing company for display apparatus 100 in advance and inform the manufacturing company of her or his information.

Data server 400 may extract only messages transmitted by predetermined (in other words, the pre-contracted) source provider 300 (for instance, a broadcasting provider) from SNS server 200 and store the extracted messages. Here, data server 400 may be embodied as a repository server.

A repository, as a place where an assembly of data is stored and maintained in an organized manner, may be a place where a user can directly access or where certain data bases, files, or documents are obtained for relocation or distribution in a network. The repository may be an assembly of data itself contained in an accessible place in a portion of a storing apparatus, or include a function to selectively extract data.

For instance, data server 400 may be embodied in such a form that it is managed by the manufacturing company for display apparatus 100.

Specifically, based on information of source provider 300 made the promise with the manufacturing company for display apparatus 100 in advance, data server 400 may extract only the messages transmitted by pre-contracted source provider 300 (for instance, the broadcasting provider) and store the extracted message.

Display apparatus 100 may connect to data server 400 to bring the SNS messages transmitted by predetermined source provider 300 and display them on a picture.

Also, display apparatus 100 may connect to data server 400 to display only SNS messages related to certain channels among the SNS messages transmitted by predetermined source provider 300.

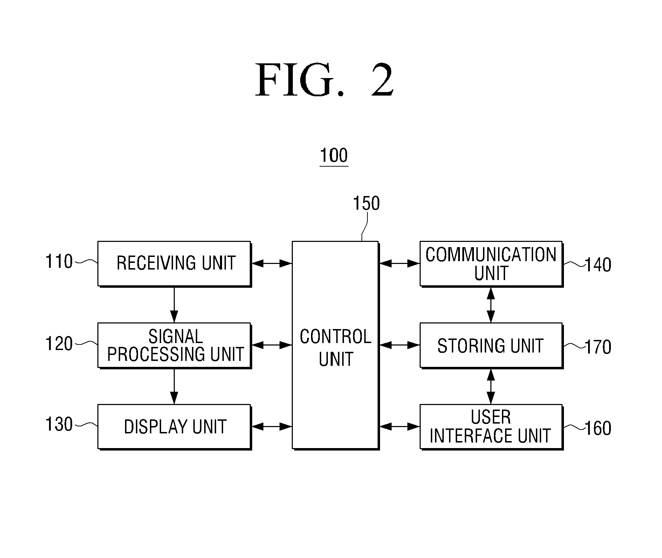

FIG. 2 is a block diagram illustrating a construction of the display apparatus according to an exemplary embodiment.

Referring to FIG. 2, display apparatus 100 includes a receiving unit 110, a signal processing unit 120, a display unit 130, a communication unit 140, a control unit 150, a user interface unit 160, and a storing unit 170.

Display apparatus 100 may be embodied as the TV able to provide the SNS messages received from the outside server, for instance, the apparatus accessible to the internet, such as the IPTV, the mobile phone, and so on.

Receiving unit 110 functions to select a broadcasting channel to receive a broadcast program. Also, receiving unit 110 may receive Electronic Program Guide information. Here, receiving unit 110 may be embodied as a tuner.

Signal processing unit 120 functions to signal-process data of the broadcast program received through receiving unit 110. Signal processing unit 120 may be embodied in a form including various functional modules, such as a decoder, a scaler, a panel driving unit and the like, required to process signals.

Display unit 130 functions to display the data of the broadcast program signal-processed through signal processing unit 120.

Display unit 130 may display a menu for providing the SNS messages, in an On-screen Display form.

Here, the menu for providing the SNS messages may include a select/cancellation option for selecting /cancelling a SNS message providing service, a filtering option for filtering SNS messages, a transparency adjusting option for adjusting a transparency of a SNS message providing picture, etc.

Further, if there is a user command for providing the SNS message providing service, the display unit 130 may display a picture including a corresponding SNS message in such a form that it is overlapped with a picture in which a present broadcast program is displayed.

Alternatively, it is possible for display unit 130 to display the picture including a corresponding SNS message in a picture (in case of a PIP or the like) different from the picture in which the present broadcast program is displayed.

Also, it is possible for display unit 130 to display the picture including a corresponding SNS message in a region different form a region in which the present broadcast program is displayed, within a single picture.

On the other hand, display unit 130 may display icons for SNSes (that is, the Twitter, the Facebook, etc.) available in a corresponding channel. According to this, the user can select corresponding icons to select desired SNSes. In this case, the user can simultaneously select more than two icons to display corresponding SNSes on the picture at the same time.

Alternatively, if the user simultaneously selects more than two SNSes, it is possible to designate an order for displaying corresponding SNSs in order to display the corresponding SNSs in a designated order.

The display unit 130 may display an EPG picture including broadcasting channel information, based on EPG information received through receiving unit 110, and display various menus related to the EPG picture in an icon form, a text form, and so on.

Here, display unit 130 may be embodied as a CRT (Cathode Ray Tube), a LCD (Liquid Crystal Display), TFT-LCD (Thin Film Transistor Liquid Crystal Display), a PDP (Plasma Display Panel), a FD (Flexible Display), a HMD (Head Mounted Display), etc.

In addition, display unit 130 is embodied as a touch screen able to sense touches. Here, the touch screen means a screen, which can directly receive inputs by touching letters or certain locations displayed on a picture (the screen) with human's fingers or other object without using a separate input device, thus to catch touched locations and implement certain processing according to the touched locations with a stored software.

The touch screen can function with an apparatus referred to as a touch panel, which is attached to a general display screen. Here, touch panel means a panel to catch locations touched with the human's fingers or the other object with an electrostatic capacity by using a film capable of detecting the electrostatic capacity, a panel to form a large number of square lattices left and right and up and down with an invisible infrared light on the screen thus to detect contacts or touches of fingers or other objects to the square lattices, and catch the touched locations, or the like.

Accordingly, when the user touches letters or figure information displayed on the screen to which the touch panel is mounted or attached, with her or his fingers, the display unit can catch what the user selects according to touched locations on the screen and implement commands corresponding to selected letters or figure information with a CPU, thereby allowing the user to very easily obtain the desired information.

In this situation, display unit 130 outputs touch signals according to the touches or contacts of the user to control unit 150. Here, the touches or contacts of the user may be implemented with various touchable objects as well as the user's fingers.

Display unit 130 may be configured in a PIP (Picture in Picture) form. In this case, contents provided from SNS server 200 are displayed on a main picture, whereas a picture for providing SNS messages is displayed on a sub picture. It is, of course, obvious to those skilled in the art, that the contrary is also possible.

Communication unit 140 functions to access the outside server to receive SNS messages corresponding to at least one of the broadcasting channel and the broadcast program among SNS messages registered with the outside server. Communication unit 140 may be embodied in a form accessible to the internet through various networks.

Control unit 150 functions to control signal processing unit 120 to display the SNS messages received through communication unit 140, on the picture displaying the broadcast program.

User interface unit 160 functions to receive a user command for SNS message confirmation in the course of displaying the broadcast program. Here, user interface unit 160 may provide a toggle button only for SNS, a SNS OSD menu, etc.

Specifically, the user interface unit 160 may provide the toggle button only for SNS. For instance, the user interface unit can be configured, so that if the user pushes the button once, a SNS data service is provided, and if the user pushes once again, the SNS data service is cleared or canceled.

Further, user interface unit 160 may provide a transparency adjusting menu for adjusting the transparency of the SNS message providing picture. By using the transparency adjusting menu, the user can display the SNS message providing picture in an overlay method or a non-overlay method.

Furthermore, user interface unit 160 may embodied to use a SNS option menu configured so that when the user selects 'On' on the SNS option menu, available SNS services are displayed.

Moreover, user interface unit 160 may provide a serviceable SNS list collected by using channel information. According to this, the user can select/cancel desired/undesired SNSes, and also simultaneously select more than two SNSes. In this case, the SNS list may include ID information necessary for the desired service to be obtained.

User interface unit 160 may provide a menu for selecting/inputting a filtering option for filtering SNS data. For instance, the filtering option may include all of a SNS message provider, that is, a broadcaster, a friend, and the others. Here, the SNS filtering option may be channel-mapped and stored.

Further, SNSes in all channels may be synthetically searched through a SNS search option.

In addition, user interface unit 160 may provide a menu for selecting the filter option for filtering the SNS messages.

The filter option may include an option for selecting the SNS message provider, an option based on information of the broadcaster, the broadcasting channel and the broadcast program, and so on. Further, to provide the filtering option, Program and System Information Protocol information, PSI/SI information, EPG information and the like may be used.

For instance, if the user connects to the SNS through her or his own account and selects "friend" (for instance, an account where the user follows or an account which follows the user) as the filtering option, only SNS messages corresponding to at least one of a present broadcasting channel and a present broadcast program within a group corresponding to "friend" can be filtered and received.

The filter option may include broadcasters, channels, titles, subtitles, time information, players, events, stories of broadcast programs, etc.

Alternatively, through the use of a hash tag or a list following, only SNS messages, which are posted by viewers watching a corresponding channel, may be displayed and offered.

Communication unit 140 may access the outside server through a network by using an outside server address stored in advance when the user command is inputted, and provide information for at least one of the broadcasting channels and the broadcast programs to receive SNS messages corresponding to the information.

User interface unit 160 may provide a picture on which the user can write out a SNS message, and when the user writes out to transmit the SNS message, the SNS message may be written out adding the hash tag, thereby allowing the filtering option to be applied to the SNS message. In this case, user feedback may be displayed in relation to a Twitterbroadcast.

On the other hand, the outside server may be embodied as a SNS server for providing SNS, or at least one data server to download and store the SNS messages from the SNS server in advance. Hereinafter, for the sake of econvenience, the outside server is explained for each exemplary example of the invention.
when the outside server is embodied as the SNS server for providing the SNS

In this situation, display apparatus 100 may be embodied as display apparatus 100 of the SNS providing system shown in FIG. 1A.

That is, as explained with reference to FIG. 1A, source provider 300 may transmit SNS messages to the SNS server 200 in the predetermined form (the form conforming to at least one of the account rule and/or the hash rule) agreed to in advance with display apparatus 100.

When the outside server is embodied as the at least one data server to down load and store the SNS messages from the SNS server, in advance

In this situation, display apparatus 100 may be embodied as display apparatus 100 of the SNS providing system shown in FIG. 1B.

That is, data server 400 may extract only the messages transmitted by predetermined (in other words, the pre-contracted) source provider 300 (for instance, the broadcasting provider) and store the extracted message. Here, data server 400 may be embodied as a repository server. For instance, data server 400 may be embodied in such a form that it is managed by the manufacturing company for display apparatus 100.

Specifically, based on the information (for instance, an account ID of the source provider 300) which source provider 300 made in advance, in a contract with the manufacturing company for display apparatus 100, data server 400 may extract only the messages transmitted by pre-contracted source provider 300 (for instance, the corresponding broadcasting provider), and store the extracted messages.

In this situation, display apparatus 100 may connect to data server 400 to bring the SNS messages transmitted by predetermined source provider 300 and display them.

Also, display apparatus 100 may connect to data server 400 to display, on the picture, only SNS messages related to the certain channels among the SNS messages transmitted by the predetermined source provider 300.

In this situation, storing unit 170 may store information of at least one of the broadcasting channels and broadcasting channel providers. Here, the information may be, for example, SNS accounts, etc.

Further, communication unit 140 may access the outside server by using the stored information.

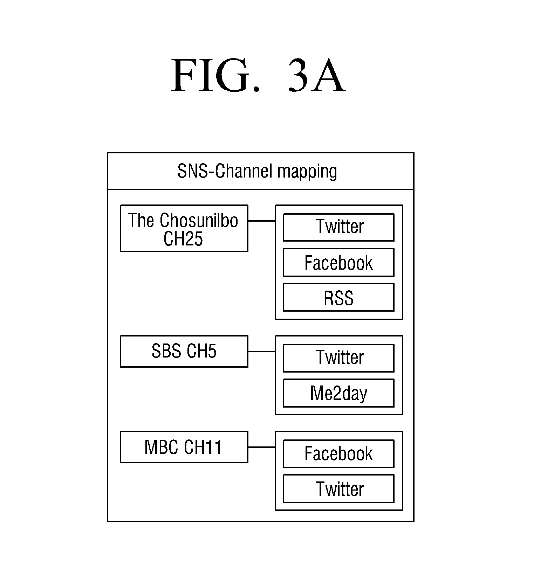

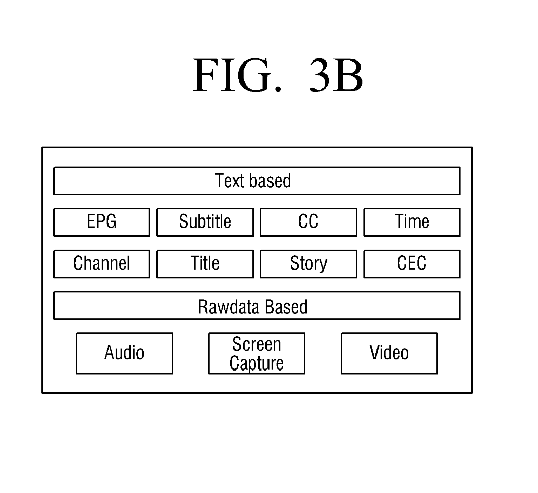

FIGS. 3A and 3B are views for explaining a SNS message providing method according to various exemplary embodiments.

According to FIG. 3A, serviceable SNSes may be mapped to each of the broadcasting channels.

For instance, the Twitter, the Facebook and the RSS can be mapped as the serviceable SNSes on The Chosunilbo CH5 if a contract or promise between the source provider 300 of The Chosunilbo CH5 and display apparatus 100 (or, the manufacturer of the display apparatus 100) is to use the Twitter, the Facebook and the RSS.

According to FIG. 3B, options, which are references capable of extracting the SNS data, may be pre-stored.

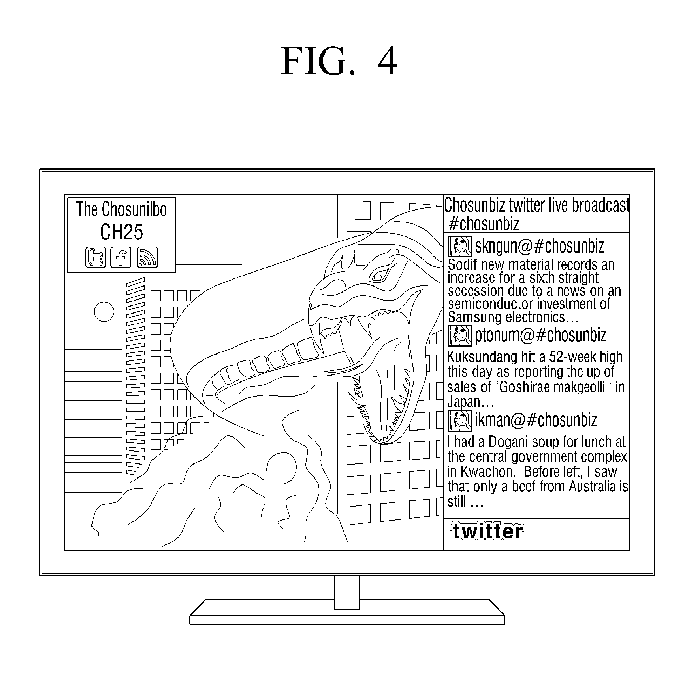

FIG. 4 is a view illustrating a SNS message providing picture according to an exemplary embodiment.

According to FIG. 4, it can be ascertained that a Twitter message is displayed, which is provided to The Chosunilbo CH5 by a corresponding broadcasting service provider.

In addition, referring to an upper region on the left side of FIG. 4, icons corresponding to the serviceable SNSes in the corresponding channel may be displayed. The user can select at least one of these icons to receive and see corresponding SNS messages. On the other hand, it will be obvious from those skilled in the art that the serviceable SNSes can be selected from a menu picture instead of the icons.

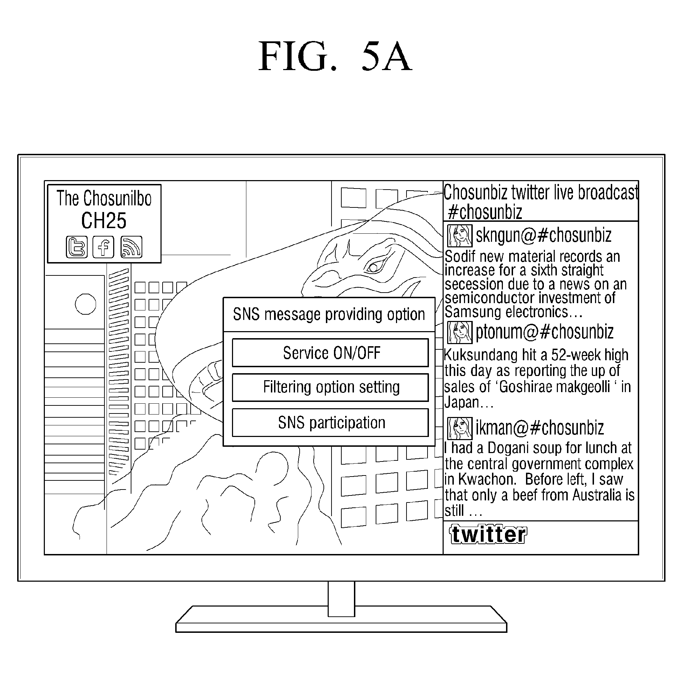

FIGS. 5A to 5D are views illustrating SNS message providing pictures according to various exemplary embodiments.

According to FIG. 5A, a SNS message menu picture related to the picture for providing the SNS messages may be displayed in an OSD form. Here, it is possible for the user to enter the SNS message menu picture through a SNS toggle button, a main menu picture and the like, which are separately provided.

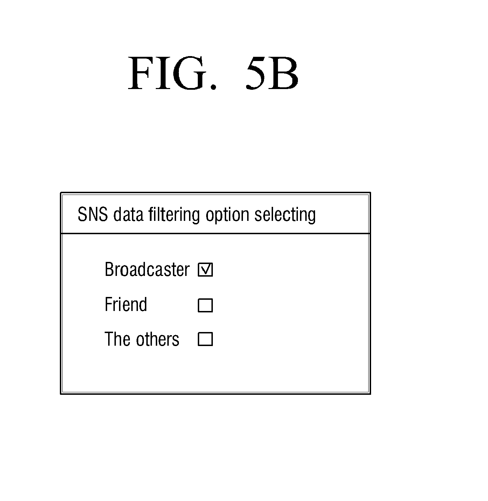

According to FIG. 5B, the user may select the SNS data filtering option through the SNS message menu picture provided in the OSD form.

For instance, if the user selects "broadcaster" as the filtering option, only the SNS messages provided by the broadcaster of the corresponding channel can be filtered and displayed on the picture.

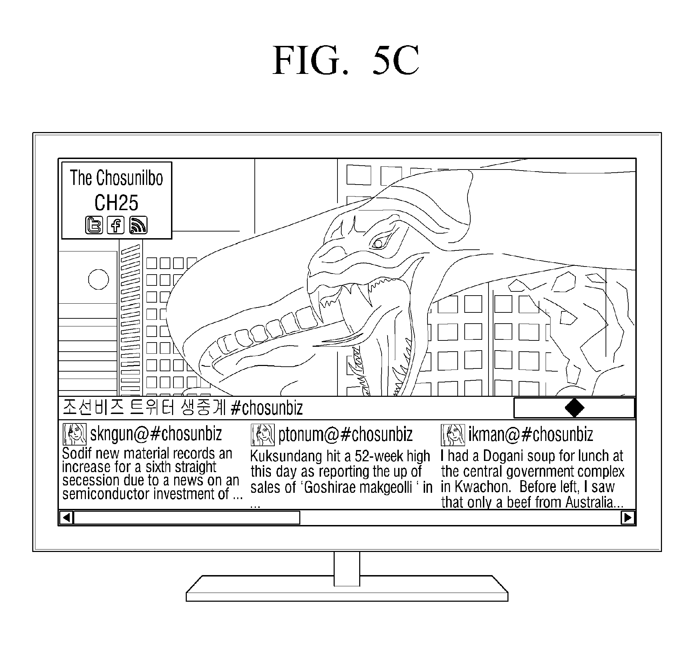

According to FIG. 5C, a transparency adjusting bar 10 capable of adjusting the transparency of the SNS message menu picture may be provided.

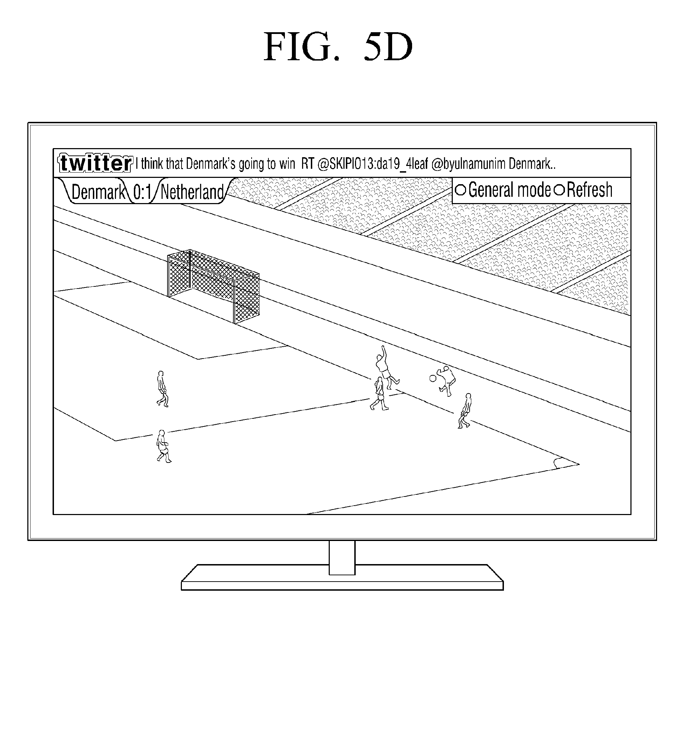

According to FIG. 5D, the SNS message menu picture may be provided in a minimum size mode for minimizing a disturbance of a broadcast being watched by the user.

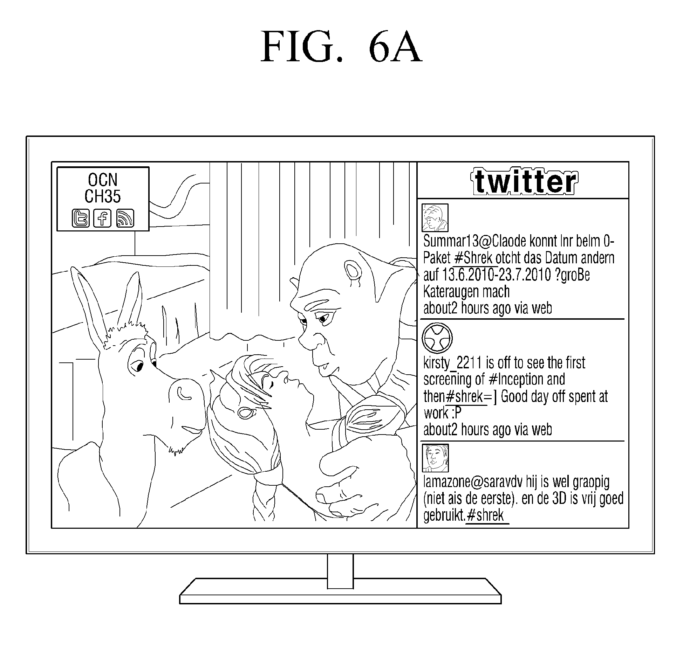

FIGS. 6A to 6C are views for explaining SNS message providing methods according to various exemplary embodiments.

According to FIG. 6A, when a movie "Shrek" is broadcast on the OCN CH35, SNS messages corresponding to a character "Shrek" of the movie can be displayed on the picture of the broadcast.

Here, the corresponding SNS messages may be SNS messages transmitted from a broadcaster of the OCN CH35 to the SNS server.

The corresponding SNS messages may be SNS messages including a title "Shrek" of the movie, among messages posted on the SNS server by general users including the broadcaster.

The corresponding SNS messages may be SNS messages including the title "Shrek" of the movie in a hash tag among the messages posted on the SNS server by the general users including the broadcaster.

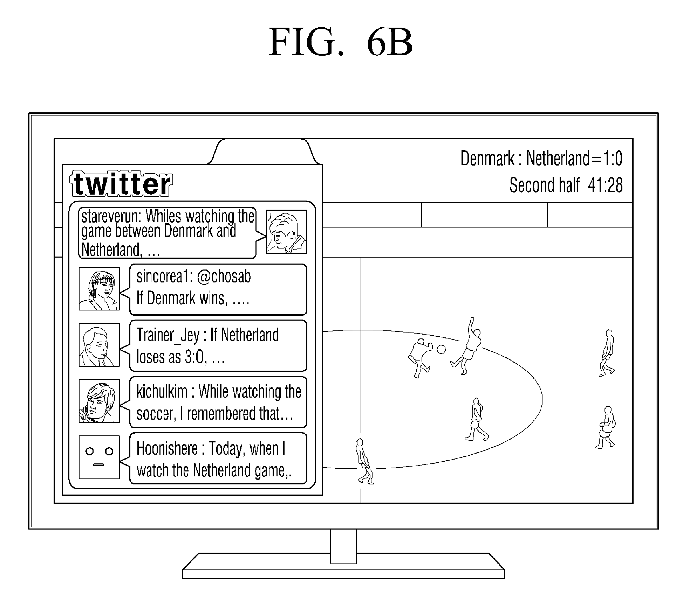

According to FIG. 6B, when a soccer game is broadcast on a broadcasting channel, SNS messages corresponding to the soccer game broadcast can be displayed on the picture.

For instance, if a soccer game between Denmark and Netherland is broadcast, SNS messages including related search words, such as "soccer," "game," and the like, as well as a name of the corresponding game (here, it is assumed as "Denmark vs. Netherland") can be received and displayed. A function for providing these related search words may be embodied by using search functions provided by conventional SNS sites or portal sites linked thereto.

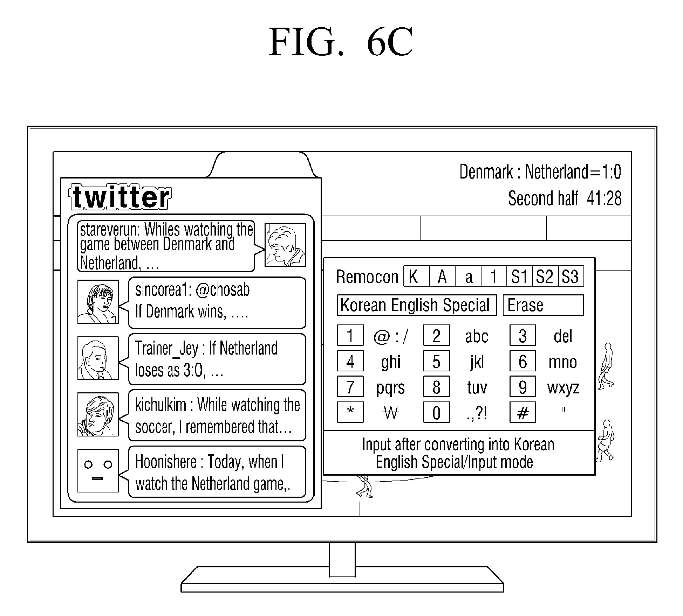

According to FIG. 6C, the user may also connect to her or his own account to write out a SNS message.

For instance, according to a user command or a predetermined event, a letter keyboard with which the user can write out a SNS message can be displayed on the picture, and it is also possible for the user to connect to her or his own account to write out a SNS message related to a broadcast program on the air. Also, it is possible for the user to respond or retweet to displayed messages.

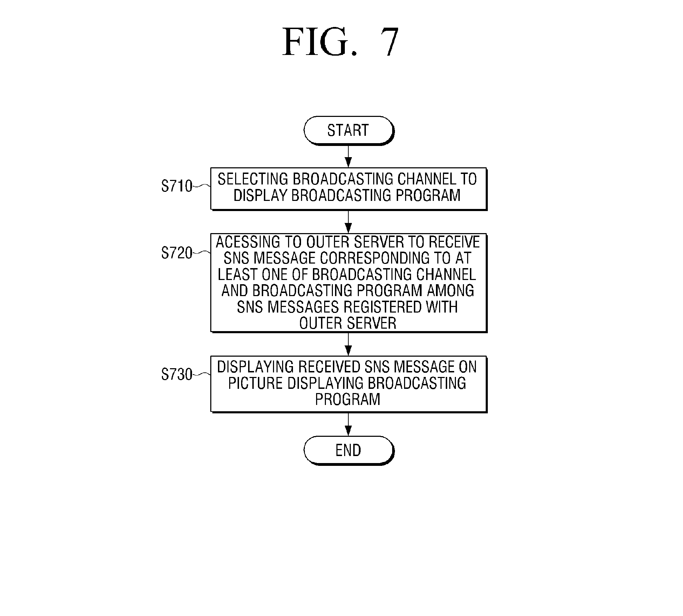

FIG. 7 is a flow chart for explaining a display method according to an exemplary embodiment.

First, the user selects a broadcasting channel to display a broadcast program (S710). And then, the user may access the outside server to receive SNS messages corresponding to at least one of the broadcasting channel and the broadcast program among SNS messages registered with the outside server (S720).

Afterwards, the received SNS message may be displayed on a picture displaying the broadcast program (S730). As occasion demands, it is also possible for the user to connect to her or his own account to write out a SNS message related to a program on the air. Also, it is possible for the user to respond or retweet to messages already displayed. In this situation, according to a user command or a predetermined event, a letter keyboard (for instance, the letter keyboard as shown in FIG. 6C) with which the user can write out the SNS message may be displayed on the picture.

Here, if the user writes out the SNS message to transmit it, the SNS message may be written out adding the hash tag, thereby allowing the filtering option to be applied to the SNS message. In this case, feedbacks among the users may be displayed with relation to the Twitter broadcast.

Receiving SNS messages may include inputting or receiving a user command for SNS message confirmation in the course of displaying a broadcast program; accessing the outside server through a network by using an outside server address stored in advance; providing an information for at least one of the broadcasting channel and the broadcast program to the outside server, and receiving SNS messages corresponding to the information provided.

Receiving the SNS message may further include selecting a filtering option for filtering the SNS message.

The filtering option may include an option for selecting SNS message providers. An option may be based on information of the broadcasters; the broadcasting channels, and the broadcast programs. For instance, information regarding the broadcast programs may include titles, subtitles, time information, players, events, stories, etc.

The outside server may include the SNS server for providing the SNS, or at least one data server to download and store, in advance the SNS messages from the SNS server.

Storing information of at least one of the broadcasting channels and service providers to provide the broadcasting channels may be further included. Receiving the SNS messages may include accessing to the outside server by using the stored information.

The SNS message may include a form conforming to at least one of a hash rule and an account rule, corresponding to at least one of the broadcasting channels and the broadcast programs.

The SNS message may include at least one of an information message, an advertizing message; an event message and a subtitle message corresponding to at least one of the broadcasting channels, and the broadcast programs.

Also, the exemplary embodiments of the present invention may include a computer readable recording medium including a program for carrying out the display method of the display apparatus, as described above. The computer readable recording medium may include all kinds of recording apparatuses in which data capable of being read by computer systems is stored. As examples of the computer reading and recording medium, there are ROM, RAM, CD-ROM, magnetic tape, a floppy disk, optical data storing device, etc. Also, the computer readable recording medium may be distributed to the computer systems connected on the network to store and carry out codes capable of being read by computer systems, in a distributed manner.

As explained as above, according to the exemplary embodiments of the present invention, it is possible to easily map SNS information on a channel-by-channel basis in the TV, to provide the mapped SNS information to the viewer, thereby allowing the viewer to easily use the SNS information with respect to a channel being watched by a viewer. For instance, the viewer can easily obtain additional information, such as famous restaurants/tourist attractions, product information (brands, locations of dealers) and the like, in the middle of watching TV.

Further, broadcasters can provide and/or offer information or advertisements to the TV viewer, thereby allowing the broadcasters to create internet businesses, based on the SNS.

Also, B2B (business to business) advertizing models between broadcasters and home electronics companies can additionally be provided.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display method comprising:
selecting a broadcasting channel to display a broadcast program;
accessing an outside server to receive a SNS (Social Network Service) message registered with the outside server; said SNS message corresponding to at least one of the broadcasting channel and the broadcast program among SNS messages registered with the outside server; and
displaying the received SNS message on a picture displaying the broadcast program.

2. The method of claim 1, wherein the accessing the outside server to receive the SNS message comprises:
inputting or receiving a user command for SNS message confirmation in the course of displaying the broadcast program;
accessing the outside server through a network by using an outside server address stored in advance;
providing an information for at least one of the broadcasting channel and the broadcast program to the outside server; and
receiving a SNS message corresponding to the information provided.

3. The method of claim 2, wherein the accessing the outside server to receive the SNS message further comprises selecting an filtering option for filtering the SNS message.

4. The method of claim 3, wherein the filtering option comprises at least one of an option for selecting a SNS message provider, and an option based on information of a broadcaster, a broadcasting channel and a broadcast program.

5. The method of any one of claims 1 to 4, wherein the outside server comprises a SNS server for providing the social network service, or at least one data server to down load and store in advance, the SNS messages from the SNS server.

6. The method of any one of claims 1 to 5,
further comprising storing information of at least one of the broadcasting channel and a service provider to provide the broadcasting channel,
wherein the accessing the outside server to receive the SNS message comprises accessing the outside server by using the stored information.

7. The method any one of claims 1 to 6, wherein the SNS message comprises a form conforming to at least one of a hash rule and an account rule corresponding to at least one of the broadcasting channel and the broadcast program.

8. The method of any one of claims 1 to 7, wherein the SNS message comprises at least one of an information message, an advertizing message, an event message and a subtitle message corresponding to at least one of the broadcasting channel and the broadcast program.

9. A display apparatus, comprising:
a receiving unit which selects a broadcasting channel to receive a broadcast program;
a signal processing unit which processes the received broadcast program for display,
a communication unit which accesses an outside server for receiving a SNS (Social Network Service) message registered with the outside server; said SNS message corresponding to at least one of the broadcasting channel and the broadcast program among SNS messages registered with the outside server; and
a control unit which controls the signal processing unit to display the received SNS message on the picture displaying the broadcast program.

10. The apparatus of claim 9, further comprising a user interface unit which inputs or receives a user command for SNS message confirmation in the course of displaying the broadcast program.

11. The apparatus of claim 10, wherein the communication unit accesses the outside server through a network by using an outside server address stored in advance when the user command is inputted, and provides information for at least one of the broadcasting channel and the broadcast program to the outside server to receive a SNS message corresponding to the information.

12. The apparatus of claim 11, wherein the user interface unit provides a menu selecting a filtering option for filtering the SNS message.

13. The apparatus of claim 12, wherein the filtering option comprises at least one of an option for selecting a SNS message provider, and an option based on information of a broadcaster, a broadcasting channel and a broadcast program.

14. The apparatus any one of claims 9 to 13, wherein the outside server comprises a SNS server which provides the social network service, or at least one data server which down loads and stores in advance, the SNS messages from the SNS server.

15. The apparatus of any one of claims 9 to 14,
further comprising a storing unit which stores information of at least one of the broadcasting channel and a service provider to provide the broadcasting channel,
wherein the communication unit accesses the outside server by using the stored information.
